# EUROPEAN PATENT APPLICATION

(11) **EP 2 974 629 A1**
(43) Date of publication of application: **20.01.2016**
(21) Application number: 14176923.2
(22) Date of filing: 14.07.2014
(51) Int. Cl.: A47J 27/022

(54) **A cooking vessel and a method of producing a cooking vessel**

(71) Applicant: Norman & Jensen IVS, 6400 Sønderborg (DK)
(72) Inventor: BERNHOLDT JENSEN, Søren Eivind, DK-6400 Sønderborg (DK)
(74) Representative: Dahlquist, Andreas Carl-Peter

(57) **Abstract**

A cooking vessel for an open flame stove, which cooking vessel comprises a vessel body with a disc-shaped bottom part which defines a top surface, the vessel body further comprises a circumferential wall which is connected to the bottom part and encircles the top surface, the top surface and the circumferential wall are adapted to receive a food product. The cooking vessel further comprises a heat transfer structure which is connected to the bottom part of the vessel body opposite the top surface, the heat transfer structure defines a bottom surface opposite the top surface and comprises at the bottom surface between an inner perimeter and an outer perimeter thereof a plurality of substantially concentric ribs, the substantially concentric ribs define in a radial direction between the inner perimeter and the outer perimeter a first distance between any two adjacent substantially concentric ribs and each of the substantially concentric ribs protrude a second distance outwardly from the bottom surface and the ratio of the second distance to the first distance is between 15:1 and 1:2, preferably between 8:1 and 1:1, more preferably between 6:1 and 2:1, most preferably about 4:1.

## Description

### Background of the invention

Cooking vessels are used for containing food or liquid products during cooking. Typically, the cooking vessel including the food product is positioned on top of a stove for receiving heat from the stove. The heat from the stove is heating the food product located inside the cooking vessel for treating the food product and making it suitable for consumption by humans. In order to withstand elevated temperatures, the cooking vessel is typically made of metal. Different kinds of cooking vessels include pots and pans. A cooking vessel is required for all stove top cooking activities, and in particular when using liquids, such as bringing water to the boil.

In order to bring water to the boil, a significant amount of energy is needed. Therefore modern stoves are typically powered by either gas, being supplied by the gas mains or a gas bottle where no gas mains are available, or the electricity mains. Electric stoves traditionally use resistive coil for heating iron plates, however, modern electric stoves may use glass ceramic plates and halogen lamps or induction for improving the heat transfer from the stove to the cooking vessel and reducing thermal loss. As a further alternative, also coal flame and wood flame stove exist. Coal flame and wood flame stoves use solid fuel in the form of coal or wood, which may be provided in the form of briquettes, pellets etc. instead of using gas. Gas stoves, coal flame stoves, wood flame stoves and similar stoves which operate by forming a flame by the direct burning of a solid, liquid or gaseous fuel may be referred to as open flame stoves. The discussion below will primarily relate to gas stoves since they are nowadays, at least commercially, the most widely used open flame stoves.

Gas stoves use natural gas, propane, butane, LPG or any similar flammable gas for producing a flame which is used for heating the cooking vessel. Gas stoves are widely used and favored by small-, medium- and large commercial establishments as well as private users due to the immediate response in heat input when the flame is increased and decreased by varying the gas supply. Further, the maximum power output of a gas stove typically exceeds the maximum power output of an equivalent electric stove. However, the drawback of gas stoves is that the thermal losses are greater for gas stoves compared to modern electric stoves. The reason for this is that heat transfer between the combustion source/flame of the open flame stove and the cooking vessel is lower than the heat transfer between the electric stove top and the cooking vessel. Only a part of the heat of the flame is used for heating the cooking vessel and a very large amount of energy is wasted or flows past and away from the vessel.

The reason for the energy loss in gas stoves is that the combustion of the flammable gas below the cooking vessel will heat up the gas below the cooking vessel and although this hot gas will transfer energy to the cooking vessel, the hot gas will flow upwards horizontally due to the density difference between the hot gas and the surrounding ambient gas and therefore about 70% of the thermal energy of the hot gas will escape along the sides of the cooking vessel.

Many attempts have been made in the past for increasing the heat transfer between the flame/hot gas and the cooking vessel and decrease the amount of hot gas escaping along the sides of the cooking vessel. Three different basic technologies have been used in the prior art, namely either using heat transfer fins or heat conductive material at the bottom of the cooking vessel in order to increase the heat transfer between the flame and the cooking vessel, or using baffles at the stove in order to prevent the hot gas from escaping along the sides of the cooking vessel.

US 2008/223359 A1 relates to a cookware having linear flame guiding channels which guide the flame from the central region of the bottom of the cookware to the perimeter of the cookware. The flame guiding channels improve the heat transfer and provide an even heating.

EP 2136687 A1 relates to a cookware provided with a base having a radial pattern of flame guide channels. Turbulence is thereby generated in the guided flame to increase heat transfer from the flame to the base.

WO 2004/000082 A2 relates to a heating vessel comprising a chamber having enclosed sides and including a highly effective heat exchanger. The heat exchanger comprises an external bottom side of the chamber and a series of thermally conductive protrusions.

JP H11 244135 A relates to a kitchen utensil comprising columnar or conical projecting fins on the outer peripheral surface of the kitchen utensil.

JP H11 206572 A relates to a heating vessel and fins for heating vessel. The fins are arranged in radial shape on the outside surface in the vicinity of the bottom part of the vessel's main body.

JP S61 191814 A relates to a gas range having kettle holder claws assuming a curved shape guiding the burner flame into a divergent vortex flow. This results in increasing the residence time of the combustion gas and improvement in the heat transfer efficiency.

JP S59 212627 relates to an adjustable type gas-heat carburettor having a ring shape with a diameter suitable to match a gas burner.

JP S5773328 A relates to a spiral pan support for a gas range. The pan support is made of iron plates and has a spiral form for directing flames and heat along the plates about two times longer distance than that of conventional arrangements. Thereby the thermal efficiency of the range may be increased.

FR 2493125 A1 relates to a cooking container having wings in its external wall for increasing the heat transferring surface of the container.

EP 1878367 A1 relates to a cookware article having an aluminium or copper core allowing for a faster heating and temperature distribution in the cookware.

EP 0 928 639 B1 relates to a method of applying a silkscreen pattern to cookware. The pattern extends from the base of the vessel along the radius of the vessel.

DE 33 39 848 A1 relates to an energy saving cooking vessel for use with an open flame and having an opening at the bottom which encloses a burner so that only the air necessary for combustion may reach the flame. The vessel has on its outside a lamelled surface and/or heat exchanging ribs.

US 2008/0029082 A1 relates to a heating utensil having a heat transfer element attached to the bottom surface of the heating utensil. The heat transfer element is either placed on the radially inner or the radially outer side of the utensil support.

US 2007/0199555A1 relates to a portable cooking system comprising a lid.

US 2006/042623 A1 relates to a cooking vessel having annular rings raised above a thermally conductive material. The annular rings serve to protect the thermally conductive material from abrasion.

US 2004/0058188 A1 relates to a cookware having improved heat transfer. The cookware is made of a multilayered composite metal sheet comprising a plurality of roll bonded metal sheets.

US 6,298,775 B1 relates to a pan having a foldable handle.

US 6,263,787 B1 relates to a thermal cooker having a thermal storage ring.

EP 1 017 507 B1 relates to a coated cookware.

US 5,564,589 A relates to a pot or pan having a plurality of fins projecting downwardly from the bottom member in a spiral pattern around the vertical axis.

US 2,840,684 A relates to a frying pan having ribs.

US 2,213,378 A relates to a heating utensil having a plurality of heat absorbing fins secured to the bottom wall.

US 2,085,220 relates to a cooking utensil having an inner rib, an outer rib and a plurality of convolute ribs from said inner rib to said outer rib.

US 1,578,741 relates to a vessel having on the bottom a plurality of metal heat conduction veins.

US 6,612,808 relates to a turbine engine having spaced apart ribs for facilitating heat transfer. The ribs have an aspect ratio between rib height and rib width of about 1.

EP 1 886 604 B1 relates to a vessel comprising an additional bottom having holes and protrusions.

The above vessels and utensils do increase the heat transfer between the flame and the food product, however, the improvement is in many cases very low or even hardly noticeable, even in case the surface area facing the flame of the gas stove is doubled or even tripled. The object of the present invention is therefore to improve the heat transfer between the flame and the food product

### Summary of the invention

The above object, together with numerous other objects, which will be evident from the below detailed description of the present invention, are, in accordance with a first aspect of the present invention, obtained by a cooking vessel for an open flame stove, the cooking vessel comprising a vessel body having a disc shaped bottom part defining a top surface, the vessel body further comprising a circumferential wall being connected to the bottom part and encircling the top surface, the top surface and the circumferential wall being adapted for receiving a food product, the cooking vessel further comprising a heat transfer structure being connected to the bottom part of the vessel body opposite the top surface, the heat transfer structure defining a bottom surface opposite the top surface and comprising at the bottom surface between an inner perimeter and an outer perimeter thereof a plurality of substantially concentric ribs, the substantially concentric ribs defining in a radial direction between the inner perimeter and the outer perimeter a first distance between any two adjacent substantially concentric ribs and each of the substantially concentric ribs protrude a second distance outwardly from the bottom surface and the ratio of the second distance to the first distance being between 15:1 and 1:2, preferably between 8:1 and 1:1, more preferably between 6:1 and 2:1, most preferably about 4:1.

As can be seen from the descriptions of the prior art documents mentioned above, numerous technologies exist relating to improving the efficiency of cooking vessels and related art. Many of the above documents suggest cooling fins oriented in the same orientation as the flow of hot gas from the stove. This will evidently increase the heat transfer due to the presence of additional surface adjacent the flame, however, the improvement in heat transfer does not correspond to the additional surface provided. This is due to the presence of a laminar boundary layer at the bottom of the cooking vessel.

The flame of a gas stove burner will be hottest at the centre of the flame and thus the flame and/or stream of hot gas will propagate from the centre of the bottom of the cooking vessel and outwardly, i.e. from within the inner perimeter towards the outer perimeter, provided that the burner is positioned in its usual position below the centre region of the bottom surface of the vessel. The flame of a gas stove burner will protrude upwardly, impinge within the inner perimeter on the bottom surface of the vessel, attach to the bottom surface of the vessel, assume a horizontal orientation outwardly along the bottom surface of the vessel and remain laminar until detachment at the edge of the bottom surface of the vessel. Thus, the flame and/or stream of hot gas will typically remain laminar and not become turbulent until after passing the bottom surface of the vessel. Thereafter the flow of hot gas will rise along the wall of the vessel and the remaining heat energy of the gas flow will be lost.

It is well known that the heat transfer between a laminar stream of gas and an adjacent solid surface will be smaller than between a turbulent stream of gas and an adjacent solid surface, provided an otherwise identical setup. The presence of fins or ribs oriented parallel to the flow will not induce any significant amount of turbulence and thus the flame and/or stream of hot gas will pass between the fins and remain substantially laminar. This is due to the laminar boundary layers forming at the bottom of the vessel.

The temperature of the top part of the cooking vessel is depending on the temperature of the bottom part of the cooking vessel. In order to maximize the heat transfer between the flame and the bottom part of the cooking vessel and at the same time avoiding heating up the circumferential wall of the cooking vessel, a heat transfer structure is provided at the bottom part and facing the flame. The concentric ribs substantially define a common centre point at which the flame is impinging at the ideal position of the cooking vessel. The inner perimeter defines the innermost ribs which ideally be located about the centre region of the flame of the gas stove burner when the cooking vessel is positioned at its intended location on the stove. The outer perimeter defines the outermost ribs adjacent the circumferential wall of the cooking vessel.

The inclusion of substantially concentric ribs, which are understood to be oriented perpendicular to the flame and/or stream of hot gas from a gas stove burner, will cause the flame and/or stream of hot gas to detach at each of the ribs and result in a recirculation zone in the cavity between the ribs. The flow detachment and recirculation zone will disrupt the laminar flow and induce turbulence into the flame and/or stream of hot gas. The height of the ribs should exceed the thickness of the laminar boundary layer which typically is defined by the thickness of the flame. In order to prevent the reattachment of the flame and/or stream of hot gas onto the bottom surface of the vessel, the distance between adjacent ribs should be small. In this way, a turbulent flow may be achieved along the complete radius of the bottom of the vessel. Further, the outwardly flow of hot gas will be obstructed and the vertical flow velocity reduced allowing the gas to remain for a longer time period adjacent the heat transfer structure and thus allow for a larger amount of energy to be transferred from the hot gas to the heat transfer structure.

The bottom part of the cooking vessel is typically circular, however, also oval, square, and rectangular bottom parts exist. In the present case the disc-shaped bottom part should be construed to encompass also non-circular bottom parts and in case of a non-circular bottom part it is understood that the heat transfer structure still be circular and the ribs being essentially concentric in order to be oriented transversally in relation to the flow of hot gas.

The applicant has performed numerous experiments to determine the optimal relation between the second distance, i.e. the height of the ribs, and the first distance, i.e. the radial distance between adjacent ribs, and found that the optimum is about 4:1. The above relations between the first distance between any two adjacent substantially concentric ribs and the second distance, which each of the substantially concentric ribs protrude outwardly from the bottom surface, will prevent any flow reattachment and promote the formation of a turbulence generating recirculation zone in the circumferential gap between the ribs while still keeping a stable and robust bottom.

According to a further embodiment of the first aspect, the substantially concentric ribs are circular. For buoyancy reasons, hot gas has a tendency to flow upwardly, i.e. vertically. By arranging the concentric ribs as circular ribs, all of the hot gas from inside the inner perimeter will be required to stream over the ribs as no other flow path exists.

According to a further embodiment of the first aspect, the substantially concentric ribs are arc-shaped. The substantially concentric ribs may be arc-shaped in order to achieve non-continuous ribs in the circumferential direction, thereby achieving interruptions in circumferential direction. This will reduce the thermal stress on the ribs and may as well be advantageous when washing the pot in the dishwasher as water will not be trapped in the circumferential gap between the ribs due to capillary effects. The radial gaps between the arc-shaped ribs will break the capillary effect otherwise occurring between the ribs. The water may thus easily flow away from between the ribs, and the thermal stress in the ribs will be reduced.

According to a further embodiment of the first aspect, the substantially concentric ribs define semi circles or arc segments of between about 45 degrees to about 180 degrees, preferably about 90 degrees to about 180 degrees, more preferably from about 120 degrees to about 180 degrees, and defining a circumferential displacement between adjacent arc segments of between 20 degrees and 90 degrees, preferably between 23 degrees and 87 degrees, more preferably between 57 degrees and 77 degrees, such as 73 degrees. The arc segments should be larger in order to reduce the number of gaps between the arc segments in the circumferential direction. The arc segments are further preferably circumferentially displaced in order to not allow a free linear flow path from the inner perimeter directly to the outer perimeter.

According to a further embodiment of the first aspect, each of the substantially concentric ribs defining in a circumferential direction between the inner perimeter and the outer perimeter a third distance between two adjacent substantially concentric ribs, the ratio between the second distance and the third distance being between 5:1 and 1:3, preferably between 4:1 and 1:2, more preferably between 3:1 and 1:1, most preferably about 2:1. The above ratios allow a sufficiently large radial gap between the concentrically ribs in the circumferential direction. In this way, water remaining from washing may easily be released from the heat transfer structure.

According to a further embodiment of the first aspect, the substantially concentric ribs are spiral shaped. The ribs may also form substantially concentric spirals. In this way the flow of hot gas may at least partially be guided into a circumferential path forming a circumferential whirl generating additional turbulence and allowing the gas to remain slightly longer adjacent the heat transfer structure.

According to a further embodiment of the first aspect, the plurality of concentric flanges defines semi spirals. Semi spirals may be used in order to achieve the same advantages in relation to thermal stress and removal of hot dishwasher water as the arc shaped ribs described above.

According to a further embodiment of the first aspect, each of the substantially concentric ribs have a trapezoidal cross-section. The substantially concentric ribs typically have a rectangular cross-section, however, it may be advantageous to have a trapezoidal cross-section. In this way the flow separation at each rib will be further turbulence promoting and the recirculation zone will be more powerful yielding additional heat transfer between the hot gas stream and the heat transfer structure.

According to a further embodiment of the first aspect, the heat transfer structure is made of copper or a copper alloy. Copper has a high thermal conductivity and is thus preferred.

According to a further embodiment of the first aspect, the heat transfer structure is made of aluminium or an aluminium alloy. Aluminium is cheaper than copper but it has a slightly lower thermal conductivity and may thus be regarded as a more affordable option.

According to a further embodiment of the first aspect, the first distance is between 2.5mm and 10mm, preferably between 3mm and 7.5mm, more preferably between 3.5mm and 6mm, most preferably between 4mm and 5mm, and, the second distance is between 5mm and 20mm, preferably between 6mm and 15mm, more preferably between 7mm and 12mm, most preferably between 8mm and 10mm. The above numbers constitute suitable distances for optimizing the heat transfer.

According to a further embodiment of the first aspect, the heat transfer structure being made of a material having a thermal conductivity being equal to or higher than the material of the vessel body. In this way more heat is accumulated in the heat transfer structure and less heat will be accumulated in the circumferential wall.

The above object, together with numerous other objects, which will be evident from the below detailed description of the present invention, are, in accordance with a second aspect of the present invention, obtained by a method of producing a cooking vessel for an open flame stove, the method comprising the following steps:
providing a vessel body having a disc shaped bottom part defining a top surface, the vessel body further comprising a circumferential wall being connected to the bottom part and encircling the top surface, the top surface and the circumferential wall being adapted for receiving a food product, and
connecting a heat transfer structure to the bottom part of the vessel body opposite the top surface, the heat transfer structure defining a bottom surface opposite the top surface and comprising at the bottom surface between an inner perimeter and an outer perimeter thereof a plurality of substantially concentric ribs, the substantially concentric ribs defining in a radial direction between the inner perimeter and the outer perimeter a first distance between any two adjacent substantially concentric ribs and each of the substantially concentric ribs protrude a second distance outwardly from the bottom surface and the ratio of the second distance to the first distance being between 15:1 and 1:2, preferably between 8:1 and 1:1, more preferably between 6:1 and 2:1, most preferably about 4:1.

The present method according to the second aspect is preferably used for producing a cooking vessel according to the first aspect. It may also be used to retrofit existing cooking vessels for improving the heat transfer between the flame/stream of hot gas and the cooking vessel.

According to a further embodiment of the first aspect, the heat transfer structure is connected to the bottom part of the vessel body by means of brazing or soldering and/or the substantially concentric ribs are made by CNC machining, moulding, extrusion, skiving, forging or stamping. Any of the above metalworking methods may preferably be used for carrying out the above mentioned according to the second aspect.

### Brief description of the drawings

FIG. 1A is a perspective view of a cooking vessel having arc shaped ribs.
FIG. 1B is a bottom view of a cooking vessel having arc shaped ribs.
FIG. 2A is a bottom view of a cooking vessel having trapezoidal arc shaped ribs.
FIG. 2B is a side view of a cooking vessel having trapezoidal arc shaped ribs.
FIG. 3 is a side view of a trapezoidal rib cross section.
FIG. 4 is a side view of a rectangular rib cross section.
FIG. 5 is a side view of an alternative trapezoidal rib cross section.
FIG. 6 is a bottom view of a spiral rib configuration.
FIG. 7 is a bottom view of an alternative arc shaped rib cross section.

### Detailed description of the drawings

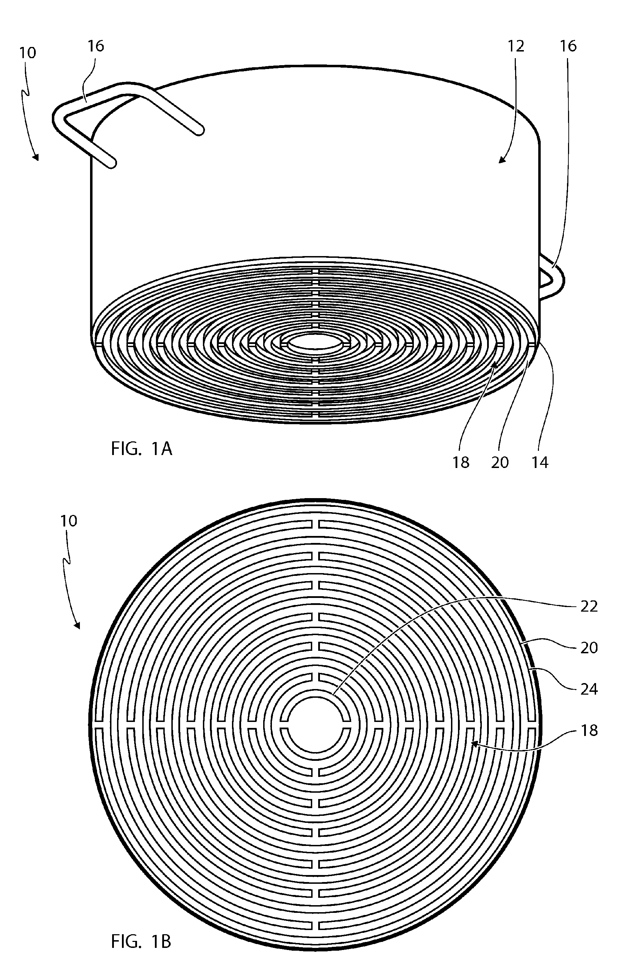

FIG. 1A shows a perspective view of a cooking vessel 10. The cooking vessel comprises a circumferential wall 12 and a disc shaped bottom part 14. The circumferential wall 12 further comprises a pair of opposite outwardly oriented handles 16. The circumferential wall 12 and the disc-shaped bottom part 14 together define a vessel body for containing a food product to be prepared, e.g. by boiling, frying etc. The vessel body is typically made of metal such as aluminium.

The bottom part 14 comprises a heat transfer structure 18. The heat transfer structure, which is preferably made of a material which is of equal or higher conductivity than the vessel body, and preferably of a highly conductive material such as copper. The heat transfer structure 18 is metallically adhered to the disc-shaped bottom part 14 of the cooking vessel by e.g. thermal epoxy or brazing. The heat transfer structure 18 comprises a number of concentric ribs 20. The heat transfer structure 18 may be made by e.g. CNC machining, forging, extruding, swaging, skiving or stamping. The concentric ribs 20 may also be bonded to the disc-shaped bottom part 14 individually, or the concentric ribs 20 and the disc-shaped bottom part 14 may be made in one piece.

The cooking vessel 10 is intended to be placed over a gas burner (not shown), e.g. a gas stove. The hot gas (not shown), e.g. the flame and surrounding heated air, will flow vertically and be obstructed by the heat transfer structure 18 of the cooking vessel 10 at which the stream of hot gas will impinge and be deflected into a substantially horizontal flow. The concentric ribs 20 will obstruct the flow and induce turbulence which will both increase the thermal conductivity and reduce the horizontal flow velocity, both contributing to a very high thermal transfer between the hot gas and the cooking vessel 10.

FIG. 1B shows a bottom view of a cooking vessel 10. The concentric ribs 20 are shown at different distances from the centre of the cooking vessel 10 from an inner perimeter 22 adjacent the centre of the disc-shaped bottom part 20 to an outer perimeter 24 adjacent the circumferential wall 12 of the cooking vessel 10. The hot gas/flame from the burner will ideally impinge and deflect within the inner perimeter 22 and flow outwardly towards the outer perimeter 24.

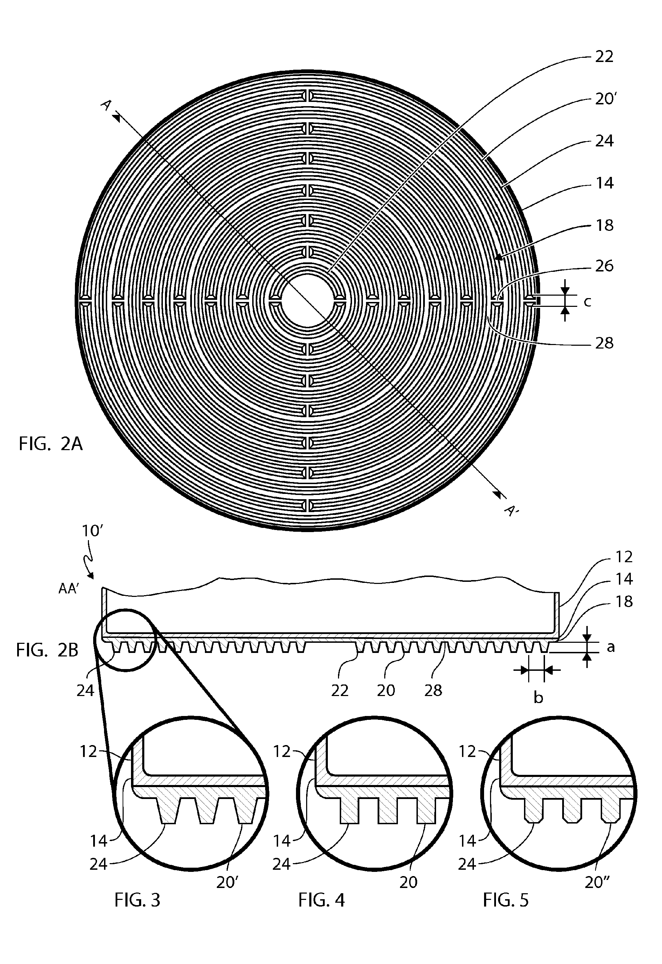

FIG. 2A shows a bottom view of the cooking vessel 10'. The concentric ribs 20' may define full concentric circles, however, in the present embodiment the concentric ribs 20' define arcs which substantially constitute semi circles. The concentric ribs 20' are separated in the circumferential direction by a radial gap 26 defining a distance c between two adjacent concentric ribs 20' in the circumferential direction. The radial gaps 26 have the advantages of reducing the thermal stress in the ribs 20' when the heat transfer structure 18 is being heated and thus prevent any deformation of the ribs 20'. Further, the radial gaps 26 prevent any accumulation of dishwasher water in the circumferential gaps 28 in-between the concentric ribs 20' since the radial gaps 26 reduce the capillary effect between concentric ribs 20'. The radial gaps 26 are circumferentially shifted in relation to each other in order to not provide a free flow path between the inner perimeter 22 and the outer perimeter 24.

FIG. 2B shows a side cut-out view of a lower section of the cooking vessel 10' along the line A to A' in FIG. 2A. In the present embodiment each of the concentric ribs 20' extend outwardly a distance a, i.e. the axial distance between the innermost point of the circumferential gap and the outermost point of the concentric rib 20'. The radial distance between two adjacent concentric ribs 20' is designated the letter b. In order to optimize the heat transfer between the stream of hot gas passing from the inner perimeter 22 to the outer perimeter 24, and, the cooking vessel 10, the ratio a:b should be between 15:1 and 1:2, preferably between 8:1 and 1, more preferably between 6:1 and 2:1, most preferably about 4:1. In this way the hot gas is obstructed and recirculated at each of the ribs 20' which prevents the formation of a laminar boundary layer at the heat transfer structure 18 and yields a very high thermal transfer between the hot gas and the cooking vessel 10'.

FIG. 3 shows a close-up view of the cross-section of the circumferential ribs 20'. In the present first embodiment, the circumferential ribs 20 have a trapezoidal cross-section which tapers in the outward direction. This shape induces additional turbulence which has been shown to additionally improve the thermal transfer between the hot gas and the cooking vessel 10'.

FIG. 4 shows a close-up view of the cross section of the circumferential ribs 20. In the present second embodiment, the circumferential ribs 20 have a rectangular cross-section. This shape induces less turbulence compared to the trapezoidal shape but will have an improved rigidity of the circumferential ribs 20.

FIG. 5 shows a close-up view of the cross-section of the circumferential ribs 20". In the present first embodiment, the circumferential ribs 20" have a smooth trapezoidal cross-section which smoothly tapers in the outward direction. This shape induces additional turbulence while still maintaining a very high rigidity of the circumferential ribs 20.

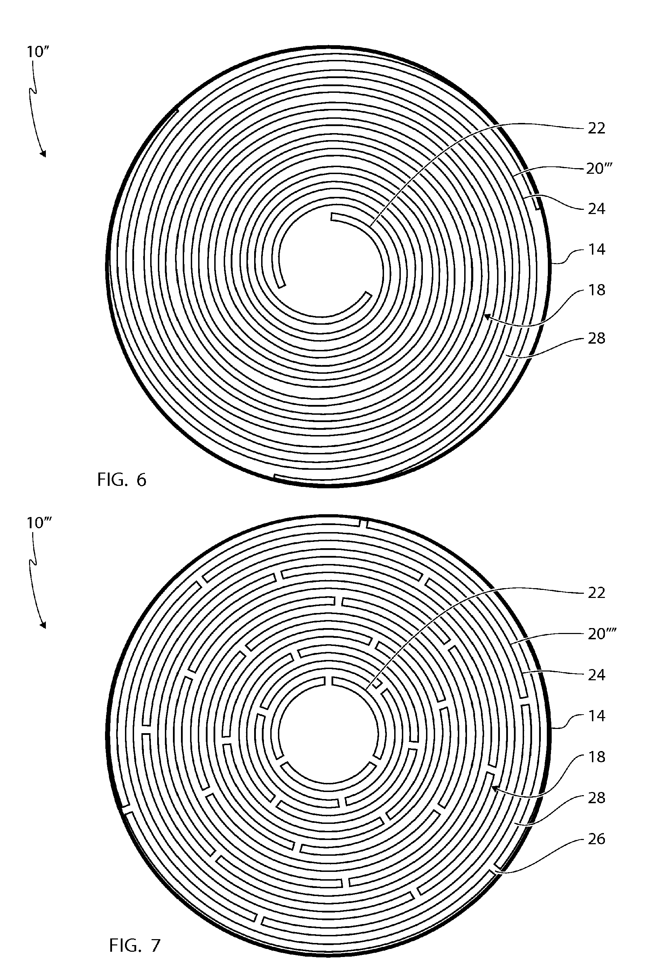

FIG. 6 shows a bottom view of the cooking vessel 10" having a set of concentric spiral ribs 20"'. The concentric spiral ribs 20'" form a pattern allowing the flow of hot gas to continually expand its energy to the different ribs on its turbulent spiral movement to the outer perimeter 24. Each of the spiral ribs 20'" extend more than one full revolution such that the hot gas will flow along the circumferential gap 28 and flow past the spiral ribs 20'" and still remain turbulent as the flow of hot gas continually tries to find a linear passage upwards.

FIG. 7 shows a bottom view of the cooking vessel 10'" having a set of concentric spiral ribs 20"" and additionally having radial gaps 26. The concentric spiral ribs 20"" are configured with a 73 degree shift between adjacent concentric spiral ribs 20"" in order to maximize the random flow of thermal energy. The gap shift is preferably between 23 degrees and 87 degrees, more preferably between 57 degrees and 77 degrees.

### Reference numerals with reference to the figures

- 10.: Cooking vessel
- 12.: Circumferential wall
- 14.: Disc-shaped bottom part
- 16.: Handle
- 18.: Heat transfer structure
- 20.: Concentric ribs
- 22.: Inner perimeter
- 24.: Outer perimeter
- 26.: Radial gap
- 28.: Circumferential gap

## Claims

1. A cooking vessel for an open flame stove, said cooking vessel comprising a vessel body having a disc-shaped bottom part defining a top surface, said vessel body further comprising a circumferential wall being connected to said bottom part and encircling said top surface, said top surface and said circumferential wall being adapted for receiving a food product, said cooking vessel further comprising a heat transfer structure being connected to said bottom part of said vessel body opposite said top surface, said heat transfer structure defining a bottom surface opposite said top surface and comprising at said bottom surface between an inner perimeter and an outer perimeter thereof a plurality of substantially concentric ribs, said substantially concentric ribs defining in a radial direction between said inner perimeter and said outer perimeter a first distance between any two adjacent substantially concentric ribs and each of said substantially concentric ribs protrude a second distance outwardly from said bottom surface and the ratio of said second distance to said first distance being between 15:1 and 1:2, preferably between 8:1 and 1:1, more preferably between 6:1 and 2:1, most preferably about 4:1.

2. The cooking vessel according to claim 1, wherein said substantially concentric ribs are circular.

3. The cooking vessel according to claim 1, wherein said substantially concentric ribs are arc-shaped.

4. The cooking vessel according to claim 3, wherein said substantially concentric ribs define semi circles or arc segments of between about 45 degrees to about 180 degrees, preferably about 90 degrees to about 180 degrees, more preferably about 120 degrees to about 180 degrees, and defining a circumferential displacement between adjacent arc segments of between 20 degrees and 90 degrees, preferably between 23 degrees and 87 degrees, more preferably between 57 degrees and 77 degrees, such as 73 degrees.

5. The cooking vessel according to claim 4, wherein each of said substantially concentric ribs defining in a circumferential direction between said inner perimeter and said outer perimeter a third distance between two adjacent substantially concentric ribs, the ratio between said third distance and said second distance being between 5:1 and 1:3, preferably between 4:1 and 1:2, more preferably between 3:1 and 1:1, most preferably about 2:1.

6. The cooking vessel according to claim 1, wherein said substantially concentric ribs are spiral shaped.

7. The cooking vessel according to claim 1, wherein said plurality of concentric flanges defines semi spirals or complete spirals.

8. The cooking vessel according to any of the preceding claims, wherein each of said substantially concentric ribs have a trapezoidal cross-section.

9. The cooking vessel according to any of the preceding claims, wherein said heat transfer structure is made of copper or a copper alloy.

10. The cooking vessel according to any of the claims 1-8, wherein said heat transfer structure is made of aluminium or an aluminium alloy.

11. The cooking vessel according to any of the preceding claims, wherein said first distance is between 2.5mm and 10mm, preferably between 3mm and 7.5mm, more preferably between 3.5mm and 6mm, most preferably between 4mm and 5mm.

12. The cooking vessel according to any of the preceding claims, wherein said second distance is between 5mm and 20mm, preferably between 6mm and 15mm, more preferably between 7mm and 12mm, most preferably between 8mm and 10mm.

13. The cooking vessel according to any of the preceding claims, wherein said heat transfer structure being made of a material having a thermal conductivity being equal to or higher than the material of said vessel body.

14. A method of producing a cooking vessel for an open flame stove, said method comprising the following steps:
providing a vessel body having a disc shaped bottom part defining a top surface, said vessel body further comprising a circumferential wall being connected to said bottom part and encircling said top surface, said top surface and said circumferential wall being adapted for receiving a food product, and
connecting a heat transfer structure to said bottom part of said vessel body opposite said top surface, said heat transfer structure defining a bottom surface opposite said top surface and comprising at said bottom surface between an inner perimeter and an outer perimeter thereof a plurality of substantially concentric ribs, said substantially concentric ribs defining in a radial direction between said inner perimeter and said outer perimeter a first distance between any two adjacent substantially concentric ribs and each of said substantially concentric ribs protrude a second distance outwardly from said bottom surface and the ratio of said second distance to said first distance being between 15:1 and 1:2, preferably between 8:1 and 1:1, more preferably between 6:1 and 2:1, most preferably about 4:1.

15. The method according to claim 14, wherein said heat transfer structure is connected to said bottom part of said vessel body by means of brazing or soldering and/or said substantially concentric ribs are made by CNC machining, moulding, extrusion, skiving, forging or stamping.
